# EUROPÄISCHE PATENTANMELDUNG

(11) **EP 2 045 682 A1**
(43) Veröffentlichungstag der Anmeldung: **08.04.2009**
(21) Anmeldenummer: 07019495.6
(22) Anmeldetag: 04.10.2007
(51) Int. Cl.: G05B 23/02

(54) **Automatisierungsvorrichtung mit einer auswertbaren MTBF**

(71) Anmelder: SIEMENS AKTIENGESELLSCHAFT, 80333 München (DE)
(72) Erfinder: Bischoff, Toni, Gerhard, 91580 Petersaurach (DE)

(57) **Zusammenfassung**

Die Erfindung betrifft eine Automatisierungsvorrichtung (8), bei dem eine abgelaufene aktuelle kontinuierliche Betriebsdauer einer oder mehrerer elektrischen oder mechanischen Komponenten (1) auswertbar ist, bzw. ein Verfahren zur Auswertung solcher abgelaufenen aktuellen kontinuierlichen Betriebsdauer. Ein Referenzwert (5) wird als eine erwartete kontinuierliche Betriebsdauer zwischen zwei Ausfällen für diese Komponente (1) vorgeschrieben. Die Automatisierungsvorrichtung (8) weist Rechenmittel (2) auf, welche eine abgelaufene aktuelle kontinuierliche Betriebsdauer der Komponente (1) auswerten, wobei eine verbleibende kontinuierliche Betriebsdauer der Komponente (1) in Abhängigkeit von der abgelaufenen aktuellen kontinuierlichen Betriebsdauer im Bezug zum Referenzwert (5) der Komponente (1) berechnet wird. Damit kann ein Benutzer voraussichtlich abschätzen bzw. erkennen, bis wann die Komponente (1) noch zuverlässig arbeiten kann. Er kann deswegen diese Komponente (1) rechtzeitig austauschen oder warten, damit ein unerwarteter Ausfall des Systems (8) vermieden werden kann.

## Beschreibung

Die Erfindung betrifft eine Automatisierungsvorrichtung, bei dem eine abgelaufene aktuelle kontinuierliche Betriebsdauer einer oder mehrerer elektrischen Komponenten auswertbar ist, bzw. ein Verfahren zur Auswertung solcher abgelaufenen aktuellen kontinuierlichen Betriebsdauer.

Eine mittlere Betriebsdauer zwischen Ausfällen (MTBT: Mean Time Between Failures) ist die durchschnittliche Anzahl der Betriebsstunden zwischen zwei Ausfällen eines Systems oder einer elektrischen Komponente (z.B. Gerät). Die MTBF ist also der statistische Durchschnittswert für die Betriebsdauer des Systems oder der Komponente, während Betriebs es störungsfrei funktioniert. Der nächste Ausfall ist im statistischen Mittel nach Ablauf der MTBF zu erwarten. Je höher also seine MTBF, umso seltener fällt das betreffende Gerät, Bauteil oder Netz aus. Die Betriebsdauer ist die akkumulierte Dauer der Betriebszeiten zwischen zwei aufeinanderfolgenden Ausfällen eines Gerätes.

Bei einer Automatisierungsvorrichtung, z.B. ein B&B-Gerät (B&B: Bedien- und Beobachtung), sind mehrere elektrische oder mechanische Komponenten vorhanden, wobei die Schwachstelle die Hintergrundbeleuchtung ist. Die MTBF der Hintergrundbeleuchtung beträgt heute z.B. zwischen 50.000 und 100.000 Stunden. Da sich dies entsprechend 5 bis 10 Jahren einstellt, ist es schwer, die restliche Betriebsdauer der Hintergrundbeleuchtung abzuschätzen und damit eine Wartung oder einen Austausch der Hintergrundbeleuchtung auszuführen. Auch die Überschreitung der MTBF ist schwer zu erkennen. Benutzern fehlt der Hinweis, wie sehr das B&B-Gerät schon verschliessen ist. Der Defekt der Hintergrundbeleuchtung kommt dann unerwartet. Deswegen muss dem Problem in der Regel durch einen vorsorglichen Wartungsaustausch von Komponenten vorgebeugt werden.

Aus der Patentschrift SU744480 ist ein MTBF-Rechner bekannt, wobei eine abgelaufene Betriebsdauer bzgl. einer MTBF mit einer geplanten Austauschzeit vergleichbar ist. Wenn die aktuelle Betriebsdauer einen Grenzwert (Threshold), also eine vorgeschriebene MTBF, überschritten hat, wird ein Signal für einen Austausch oder einer Wartung erzeugt.

Der Erfindung liegt die Aufgabe zu Grunde, die Möglichkeit einer potentialen Beschädigung oder eines plötzlichen Ausfalls für eine Automatisierungsvorrichtung zu verringern.

Diese Aufgabe wird erfindungsgemäß durch eine Automatisierungsvorrichtung mit den Merkmalen des Patentanspruchs 1 bzw. durch ein Verfahren mit den Merkmalen des Patentanspruchs 6 gelöst. Die abhängigen Ansprüche betreffen vorteilhafte Weiterbildungen und Ausgestaltungen der Erfindung.

Der Erfindung liegt die Erkenntnis zugrunde, Benutzern eine verbleibende kontinuierliche Betriebsdauer einer elektrischen oder mechanischen Komponente hinsichtlich deren erwarteten kontinuierlichen Betriebsdauer zwischen zwei Ausfällen bekannt zu machen. Bei einer Automatisierungsvorrichtung, die eine oder mehrere oben genannte Komponenten aufweist, wird im Regelfall eine "mittlere Betriebsdauer zwischen Ausfällen" (MTBF) als Referenzwert für eine Komponente, die meist leicht kaputt ging, werksseitig vorgeschrieben. D.h., eine kontinuierliche Betriebsdauer der Komponente zwischen ihren zwei Ausfällen kann in der Tat kürzer als der vorgeschriebene MTBF-Wert sein. Die MTBF kann auch deutlich über einer Dauer liegen, die die Komponente arbeitet, bevor sie verschlissen ist. Die Automatisierungsvorrichtung weist Rechenmittel (z.B. einen Prozessor) zur Auswertung einer abgelaufenen aktuellen kontinuierlichen Betriebsdauer der Komponente auf, wobei die Rechenmittel eine verbleibende kontinuierliche Betriebsdauer der Komponente in Abhängigkeit von der abgelaufenen aktuellen kontinuierlichen Betriebsdauer in Bezug zum Referenzwert der Komponente berechnen. Die bisherige, kontinuierlich abgelaufene Betriebszeit der Komponente wird von dem letzten Ausfall der Komponente ab bis zum Zeitpunkt der Auswertung berechnet. Damit kann eine restliche, kontinuierliche Betriebszeit der Komponente ermittelt werden, wobei inzwischen die Komponente normalerweise ohne Ausfall noch arbeiten sollte. Somit wird Benutzern ein vermutlicher Tag oder Zeitpunk eines Ausfalls bekannt gemacht. Ein Benutzer kann erkennen/ablesen, wie lange die Komponente noch zuverlässig arbeiten kann. Eine Komponente einer Automatisierungsvorrichtung kann zielgerichtet und vorausschauend ausgetauscht werden. Ungewollte Ausfälle der Automatisierungsvorrichtung können somit eliminiert werden.

Gemäß einer vorteilhaften Ausgestaltung der Erfindung weist die Automatisierungsvorrichtung Mittel, wie z.B. Sensoren, zur Erfassung mindestens eines aktuellen Betriebsparameters und/oder mindestens eines aktuellen Umfeldparameters der Komponente auf. Solche Parameter können z.B. Temperatur, Istwerte von Strahlungen, Feuchtigkeit bzw. Erschütterungen aber auch Drücke sein. Beispielsweise beeinflusst eine hohe Betriebs- oder Umfeldtemperatur direkt den MTBF-Wert bzw. die Lebensdauer einer elektrischen Komponente. Je wärmer die Komponente ist, desto kurzlebiger ist die Komponente. Im Vergleich zu einem vorgeschriebenen MTBF der Komponente kann die tatsächliche MTBF dieser Komponente auf Grund ihrer Betriebstemperatur bzw. der Feuchtigkeit ihres Einsatzumfelds deutlich verkürzt oder verlängert werden. Deswegen sollte eine abgelaufene aktuelle kontinuierliche Betriebsdauer einer elektrischen Komponente nicht nur abhängig von einer vorgeschriebenen MTBF der Komponente, sonder auch unter Berücksichtigung solcher erfassten Parameter ausgewertet werden.

Gemäß einer weiteren vorteilhaften Ausgestaltung der Erfindung werden der aktuelle Betriebsparameter und/oder der aktuelle Umfeldparameter der Komponente zyklisch erfasst, um die Komponente bzw. die Automatisierungsvorrichtung ständig überwachen und immer aktuellen Parameter erfassen zu können. Dementsprechend können die Rechenmittel die abgelaufene aktuelle kontinuierliche Betriebsdauer der Komponente ebenfalls zyklisch auswerten. Im Reparaturfall kann somit der letzte Temperaturverlauf kontrolliert und protokolliert werden.

Gemäß einer anderen vorteilhaften Ausgestaltung der Erfindung weist die Automatisierungsvorrichtung ein Anzeigemittel, z.B. ein Display oder ein Touchscreen auf, wobei durch das Anzeigemittel ein Ergebnis der durch die Rechenmittel ausgeführten Auswertung, vorzugsweise die berechnete, verbleibende kontinuierliche Betriebsdauer der Komponente, der erfasste Betriebsparameter und/oder der erfasste Umfeldparameter der Komponente dargestellt werden kann. Dadurch hat man eine Übersicht auch in Detail, bei welcher Temperatur die Komponente wie lange weiter arbeiten könnte.

In vorteilhafter Weise wird ein Alarmsignal gemäß dem erfassten aktuellen Parameterwert generiert, wenn z.B. die Temperatur der Komponente zu hoch ist. Bei einem Alarm kann die Automatisierungsvorrichtung auch automatisch notausgeschaltet werden, um z.B. einen Defekt einer eine hohe Temperatur aufweisenden Komponente zu vermeiden.

Ein Automatisierungssystem kann eine oder mehrere derartige Automatisierungsvorrichtungen umfassen, damit die Automatisierungsvorrichtungen oder deren Komponenten zielgerichtet und vorausschauend ausgetauscht werden können. Ungewollte Ausfälle des Automatisierungssystems können somit ebenfalls eliminiert werden.

Darüber hinaus betrifft die Eingabevorrichtung noch ein Verfahren zur Auswertung einer abgelaufenen aktuellen kontinuierlichen Betriebsdauer für mindestens eine elektrische Komponente, bei dem ein Referenzwert als eine erwartete kontinuierliche Betriebsdauer zwischen zwei Ausfällen für diese Komponente vorgeschrieben wird. Eine abgelaufene aktuelle kontinuierliche Betriebsdauer der Komponente wird dabei ausgewertet. Eine verbleibende kontinuierliche Betriebsdauer der Komponente wird in Abhängigkeit von der abgelaufenen aktuellen kontinuierlichen Betriebsdauer in Bezug zum Referenzwert der Komponente berechnet.

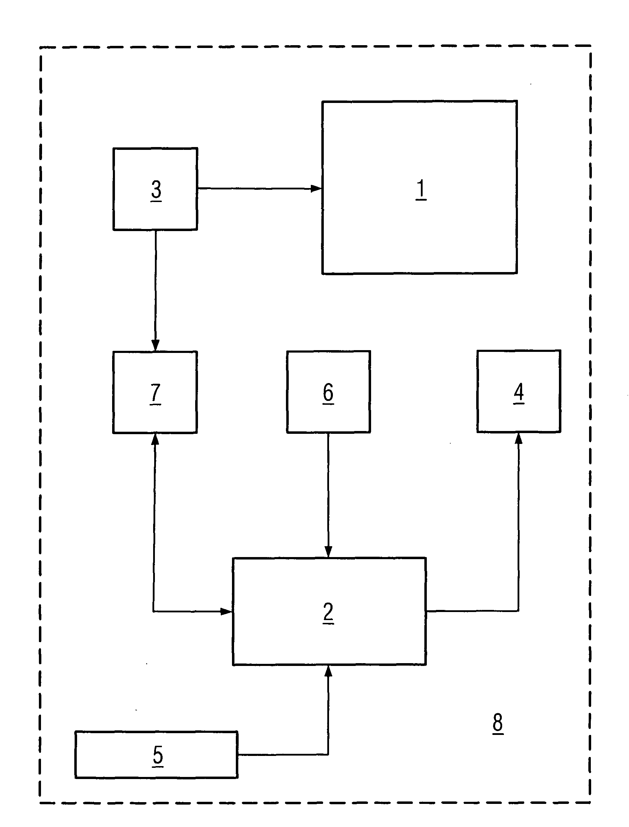

Nachfolgend wird die Erfindung anhand des in der Figur dargestellten Ausführungsbeispiels näher beschrieben und erläutert.

Es zeigt:
- FIG: ein Blockschaltbild einer erfindungsgemäßen Automati- sierungsvorrichtung.

In der FIG wird eine Automatisierungsvorrichtung 8 mit mehreren verschiedenen elektronischen Komponenten 1 angezeigt, wobei mindestens eine Komponente 1 durch eine MTBF (mittlere Betriebsdauer zwischen Ausfällen) gezeichnet ist. Diese MTBF wird in Form eines Referenzwertes 5 als eine erwartete kontinuierliche Betriebsdauer zwischen zwei Ausfällen der Komponente 1 werksseitig vorgeschrieben und in die Automatisierungsvorrichtung 8 gespeichert. Bei Bedarf ist es auch möglich, den Referenzwert 5 direkt in die Komponente 1 einzuspeichern. Durch einen Zähler 6 wird eine abgelaufene kontinuierliche Betriebszeit der Komponente 1 von deren letzten Ausfall ab bis zu einem beliebigen Zeitpunkt berechnet. Die Automatisierungsvorrichtung 8 weist Rechenmittel 2, z.B. einen Prozessor, zur Auswertung einer abgelaufenen aktuellen kontinuierlichen Betriebsdauer der Komponente 1 auf. Bei der Auswertung kann eine restliche, kontinuierliche Betriebszeit der Komponente 1 in Abhängigkeit von der abgelaufenen aktuellen kontinuierlichen Betriebsdauer in Bezug auf den Referenzwert 5 der Komponente 1 berechnet werden. Dadurch, dass die abgelaufene aktuelle kontinuierliche Betriebsdauer der Komponente 1 berechnet wurde, kann der Benutzer z.B. auf die Zeitspanne zwischen dem aktuellen Zeitpunkt der Auswertung und der vorgeschriebenen Referenzwert 5 der Komponente 1 hingewiesen werden.

Häufig ist eine tatsächliche MTBF einer derartigen Komponente 1 nicht immer gleich mit der als Referenzwert 5 vorgeschriebenen MTBF. Die tatsächliche MTBF kann auf Grund einer Betriebstemperatur bzw. einer Umfeldtemperatur der Komponente 1 verkürzt oder verlängert werden. Die Temperatur beeinflusst direkt die tatsächliche MTBF bzw. die Lebensdauer der Komponente 1. Die Automatisierungsvorrichtung 8 weist somit Erfassungsmittel 3 (z.B. ein NTC-Widerstand) als Sensoren auf, um eine aktuelle Temperatur der Komponente 1 oder der meist gefährdesten Stellen in der Automatisierungsvorrichtung 8 zu erfassen. Die Temperaturwerte können zyklisch erfasst und vorab in einem Puffer 7 der Automatisierungsvorrichtung 8 gespeichert werden. Die Rechenmittel 2 können die gespeicherten Temperaturwerte jeder Zeit oder zyklisch aufrufen. Auf Basis von den Temperaturwerten können die Rechenmittel 2 eine abgelaufene aktuelle kontinuierliche Betriebsdauer der Komponente 1 anpassend auswerten, um eine verbleibende kontinuierliche Betriebsdauer der Komponente 1 oder eine tatsächliche restliche MTBF im Bezug auf den Referenzwert 5 zu berechnen, wobei ein Algorithmus zur Berechnung der tatsächlichen MTBF, welche sich je nach der aktuellen Temperatur bzw. anderen Parametern variiert, entweder vom werkseitig oder benutzerseitig vorgegeben werden kann.

Ein Anzeigemittel (z.B. ein Display) 4 wird vorgesehen, um ein Ergebnis der durch die Rechenmittel 2 ausgeführten Auswertung und die erfasste aktuelle Temperatur gleichzeitig anzuzeigen. Vorzugsweise wird die berechnete, verbleibende kontinuierliche Betriebsdauer der Komponente 1 dargestellt. Temperaturüberschreitungen der Komponente 1 oder des Umfelds der Automatisierungsvorrichtung 8 können auch direkt visualisiert und gemeldet werden. Ein Alarmsignal wird durch die Automatisierungsvorrichtung 8 automatisch generiert, wenn die Betriebstemperatur der Komponente 1 zu hoch ist. Die Automatisierungsvorrichtung 8 kann auch notausgeschaltet werden, um sich in einen sicheren Zustand bringen zu können und damit einen Defekt der Komponente 1 zu vermeiden.

Zusammengefasst wird Benutzern durch die Automatisierungsvorrichtung 8 oder das Verfahren eine Möglichkeit gegeben, eine tatsächlich verbleibende kontinuierliche Betriebsdauer einer Komponente 1 der Automatisierungsvorrichtung 8 hinsichtlich einer vorgeschriebenen MTBF der Komponente 1 ansehen zu können. Damit kann ein Benutzer erkennen, bis wann die Komponente 1 noch zuverlässig arbeiten kann, und welche Bauteile welche Rest MTBF noch haben. Er kann deswegen diese Komponente 1 rechtzeitig austauschen oder warten. Die Automatisierungsvorrichtung 8 können auch zu zwei oder zu mehreren in ein Automatisierungssystem eingesetzt werden. Damit kann ein unerwarteter Ausfall der Automatisierungsvorrichtung 8 oder des Automatisierungssystems möglichst vermieden werden. Dieses Verfahren lässt sich auch dazu verwenden, eine restliche Lebensdauer von Komponenten bzw. einer Vorrichtung zu berechnen und dann anzuzeigen.

## Patentansprüche

1. Automatisierungsvorrichtung (8), wobei ein Referenzwert (5) als eine erwartete kontinuierliche Betriebsdauer zwischen zwei Ausfällen für mindestens eine elektronische oder mechanische Komponente (1) der Automatisierungsvorrichtung (8) vorgesehen und wobei,
die Automatisierungsvorrichtung (8) Rechenmittel (2) zur Auswertung einer abgelaufenen aktuellen kontinuierlichen Betriebsdauer der Komponente (1) aufweist, wobei eine verbleibende kontinuierliche Betriebsdauer der Komponente (1) in Abhängigkeit von der abgelaufenen aktuellen kontinuierlichen Betriebsdauer im Bezug zum Referenzwert (5) der Komponente (1) berechenbar ist.

2. Automatisierungsvorrichtung (8) nach Anspruch 1, wobei die Automatisierungsvorrichtung (8) Mittel (3) zur Erfassung mindestens eines aktuellen Betriebsparameters und/oder mindestens eines aktuellen Umfeldparameters der Komponente (1) aufweist, wobei die Rechenmittel (2) die abgelaufene aktuelle kontinuierliche Betriebsdauer der Komponente (1) auf Basis des erfassten Betriebsparameters und/oder des erfassten Umfeldparameters der Komponente (1) auswertet.

3. Automatisierungsvorrichtung (8) nach Anspruch 1 oder 2, wobei
die Mittel (3) den aktuellen Betriebsparameter und/oder den aktuellen Umfeldparameter der Komponente (1) zyklisch erfassen.

4. Automatisierungsvorrichtung (8) nach einem der Ansprüche 1 bis 3, wobei
die Automatisierungsvorrichtung (8) ein Anzeigemittel (4) zur Darstellung von einem Ergebnis der Auswertung der abgelaufenen aktuellen kontinuierlichen Betriebsdauer, den erfassten Betriebsparametern und/oder den erfassten Umfeldparametern der Komponente (1) aufweist.

5. Automatisierungsvorrichtung (8) nach einem der Ansprüche 1 bis 4, wobei
ein Alarmsignal gemäß der Erfassung des Betriebsparameters und/oder des Umfeldparameters der Komponente (1) generierbar ist.

6. Automatisierungssystem mit mindestens einer Automatisierungsvorrichtung (8) nach einem der vorherigen Ansprüche 1 bis 5.

7. Verfahren zur Auswertung einer abgelaufenen aktuellen kontinuierlichen Betriebsdauer für mindestens eine elektrische oder mechanische Komponente (1) in einer Automatisierungsvorrichtung (8), bei dem
ein Referenzwert (5) als eine erwartete kontinuierliche Betriebsdauer zwischen zwei Ausfällen für die Komponente (1) vorgeschrieben wird,
eine abgelaufene aktuelle kontinuierliche Betriebsdauer der Komponente (1) ausgewertet wird und
eine verbleibende kontinuierliche Betriebsdauer der Komponente (1) in Abhängigkeit von der abgelaufenen aktuellen kontinuierlichen Betriebsdauer im Bezug zum Referenzwert (5) der Komponente (1) berechnet wird.

8. Verfahren nach Anspruch 7, wobei
zumindest ein aktueller Betriebsparameter und/oder zumindest ein aktueller Umfeldparameter der Komponente (1) erfasst werden, wobei die abgelaufene aktuelle kontinuierliche Betriebsdauer der Komponente (1) auf Basis des erfassten Betriebsparameters und/oder des erfassten Umfeldparameters der Komponente (1) ausgewertet wird.

9. Verfahren nach Anspruch 7 oder 8, wobei
der aktuelle Betriebsparameter und/oder der aktuelle Umfeldparameter der Komponente (1) zyklisch erfasst werden.

10. Verfahren nach einem der Ansprüche 7 bis 9, wobei ein Ergebnis der Auswertung der abgelaufenen aktuellen kontinuierlichen Betriebsdauer, der erfasste Betriebsparameter und/oder der erfasste Umfeldparameter der Komponente (1) durch ein Anzeigemittel (4) dargestellt werden.

11. Verfahren nach einem der Ansprüche 6 bis 9, wobei ein Alarmsignal gemäß der Erfassung des aktuellen Betriebsparameters und/oder des aktuellen Umfeldparameters der Komponente (1) generiert wird.
